# EUROPEAN PATENT APPLICATION

(11) **EP 2 343 325 A1**
(43) Date of publication of application: **13.07.2011**
(21) Application number: 09824756.2
(22) Date of filing: 30.10.2009
(51) Int. Cl.: C08F 214/18, C08F 2/38, C08J 3/24

(54) **FLUORINE-CONTAINING ELASTIC COPOLYMER, METHOD FOR PRODUCING SAME, AND CROSSLINKED RUBBER**

(30) Priority: 05.11.2008 JP 2008283984
(71) Applicant: Asahi Glass Company Limited, Chiyoda-ku Tokyo 100-8405 (JP)
(72) Inventor: KOSE, Takehiro, Tokyo 100-8405 (JP); SEKI, Mitsuru, Tokyo 100-8405 (JP)
(74) Representative: Müller-Boré & Partner Patentanwälte
(86) International application number: PCT/JP2009/068692
(87) International publication number: WO 2010/053056

(57) **Abstract**

To provide a fluorinated elastic copolymer having a high crosslinkability and flowability and excellent in the compression set and the resistance to bases, and a process for its production, and a crosslinked rubber.

A fluorinated elastic copolymer having repeating units (A) based on at least one monomer (a) selected from the group consisting of tetrafluoroethylene, hexafluoropropylene, vinylidene fluoride, chlorotrifluoroethylene and a perfluoro(alkyl vinyl ether), repeating units (B) based on at least one monomer (b) selected from the group consisting of vinyl crotonate, divinyl adipate and 1,4-butanediol divinyl ether and, as the case requires, repeating units (C) based on at least one monomer (c) selected from ethylene or propylene, and having iodine atoms, and a crosslinked rubber obtained by crosslinking the fluorinated elastic copolymer by an organic peroxide.

## Description

### TECHNICAL FIELD

The present invention relates to a fluorinated elastic copolymer having a high crosslinkability, a process for producing the same, and a crosslinked rubber.

### BACKGROUND ART

A fluorinated elastic copolymer (hereinafter referred to also as fluorinated elastomer) is excellent in the heat resistance, the chemical resistance, the oil resistance, the weather resistance, etc., and accordingly applicable in a severe environment which a conventional hydrocarbon material cannot withstand. As a fluorinated elastic copolymer, a vinylidene fluoride/hexafluoropropylene copolymer, a tetrafluoroethylene/propylene copolymer, a tetrafluoroethylene/perfluoro(alkyl vinyl ether) copolymer, etc. have been known.

Such a fluorinated elastic copolymer is poor in reactivity and is thereby insufficient in crosslinkability and adhesion to other materials, and accordingly a method of introducing a reactive functional group thereby to improve the reactivity has been proposed. Particularly, in order to improve crosslinkability by a peroxide, a method of copolymerizing a special crosslinkable monomer or pre-treatment before crosslinking by a peroxide, has been carried out. For example, a fluorinated elastic copolymer obtained by copolymerizing vinylidene fluoride with hexafluoropropylene in the presence of a fluorinated chain transfer agent containing iodine atoms, contains iodine atoms at the polymer terminals, and accordingly peroxide crosslinking is possible (Patent Document 1 and Non-Patent Document 1).

On the other hand, a tetrafluoroethylene/propylene copolymer is excellent in the amine resistance and the high temperature steam resistance as compared with the above fluorinated elastic copolymer having repeating units of vinylidene fluoride. A fluorinated elastic copolymer obtained by copolymerizing a tetrafluoroethylene/propylene in the presence of a fluorinated chain transfer agent containing iodine atoms has also been proposed (Patent Document 2).

However, by the method disclosed in the Patent Document 2, the polymerization rate is low, and the productivity of the fluorinated elastic copolymer is very low. Further, the obtained fluorinated elastic copolymer has insufficient crosslinkability, and the physical properties of a crosslinked rubber including the compression set are unsatisfactory.

Further, a fluorinated elastic copolymer having a double bond in the side chain obtained by copolymerizing a crosslinkable monomer such as vinyl ester monomer has also been proposed (Patent Documents 3 and 4).

However, the fluorinated elastic copolymer (tetrafluoroethylene/propylene copolymer) has had a problem such that as the copolymerization ratio of the crosslinkable monomer increases, the double bonds in the side chains of the produced copolymer partly react during polymerization reaction, whereby the viscosity of the fluorinated elastic copolymer increases. Further, if the copolymerization ratio of the required crosslinkable monomer is increased in order to obtain a crosslinked rubber having a desired strength and compression set, the strength under a high temperature condition may be significantly decreased. On the other hand, if the copolymerization ratio of the crosslinkable monomer is decreased, the crosslinkability may be decreased, and it has been difficult to obtain a crosslinked rubber having an excellent balance of the crosslinkability, the strength, the compression set, the elongation and the strength under a high temperature condition.

### PRIOR ART DOCUMENTS

### PATENT DOCUMENTS

Patent Document 1: JP-A-53-125491
Patent Document 2: JP-A-5-222130
Patent Document 3: JP-B-62-56887
Patent Document 4: JP-A-2006-70245

### NON-PATENT DOCUMENT

Non-Patent Document 1: Masayoshi Tatemoto, Japanese Journal of Polymer Science and Technology, 49(10), p. 765-783 (1992)

### DISCLOSURE OF INVENTION

### TECHNICAL PROBLEM

The object of the present invention is to provide a fluorinated elastic copolymer excellent in the crosslinkability, the balance of the heat resistance, the chemical resistance and the compression set, and the mechanical properties under a high temperature condition, a process for its production, and a crosslinked rubber.

### SOLUTION TO PROBLEM

The present invention provides a fluorinated elastic copolymer, a process for its production, and a crosslinked rubber, having the following constructions.
[1] A fluorinated elastic copolymer having repeating units (A) based on the following monomer (a), repeating units (B) based on the following monomer (b) and, as the case requires, repeating units (C) based on the following monomer (c), which copolymer contains iodine atoms.
   monomer (a): at least one member selected from the group consisting of tetrafluoroethylene, hexafluoropropylene, vinylidene fluoride, chlorotrifluoroethylene and a perfluoro(alkyl vinyl ether).
   monomer (b): at least one member selected from the group consisting of a monomer represented by the following formula (I), a monomer represented by the following formula (II) and a monomer represented by the following formula (III).

   CR¹R²=CR³-O-R⁴-O-CR⁵=CR⁶R⁷ (I)

   CR⁸R⁹=CR¹⁰-OCO-R¹¹-COO-CR¹²=CR¹³R¹⁴ (II)

   CR¹⁵R¹⁶=CR¹⁷COOCH=CH₂ (III)

   (wherein each of R¹, R², R³, R⁵, R⁶, R⁷, R⁸, R⁹, R¹⁰, R¹², R¹³, R¹⁴ and R¹⁷ independently represents a hydrogen atom, a fluorine atom or a methyl group, and each of R⁴ and R¹¹ independently represents a C₁₋₁₀ alkylene group which may contain an etheric oxygen atom, and each of R¹⁵ and R¹⁶ independently represents a hydrogen atom or a C₁₋₁₀ alkyl group which may contain an etheric oxygen atom).
   monomer (c): at least one member selected from the group consisting of ethylene and propylene.
[2] The fluorinated elastic copolymer according to the above [1], wherein the molar ratio [(B)/{(A)+(C)}] of the repeating units (B) to the total amount of the repeating units (A) and the repeating units (C) is from 0.01/100 to 1.5/100.
[3] The fluorinated elastic copolymer according to the above [1] or [2], which has iodine atoms at polymer chain terminals.
[4] The fluorinated elastic copolymer according to any one of the above [1] to [3], which has the repeating units (C), wherein (C)/(A) is from 1/99 to 70/30 (molar ratio).
[5] The fluorinated elastic copolymer according to any one of the above [1] to [4], wherein each of R¹, R², R³, R⁵, R⁶ and R⁷ in the formula (I) is a hydrogen atom.
[6] The fluorinated elastic copolymer according to any one of the above [1] to [4], wherein the monomer (b) is 1,4-butanediol divinyl ether.
[7] The fluorinated elastic copolymer according to any one of the above [1] to [4], wherein each of R⁸, R⁹, R¹⁰, R¹², R¹³ and R¹⁴ in the formula (II) is a hydrogen atom.
[8] The fluorinated elastic copolymer according to any one of the above [1] to [4], wherein the monomer (b) is divinyl adipate.
[9] The fluorinated elastic copolymer according to any one of the above [1] to [4], wherein each of R¹⁶ and R¹⁷ in the formula (III) is a hydrogen atom.
[10] The fluorinated elastic copolymer according to any one of the above [1] to [4], wherein the monomer (b) is vinyl crotonate.
[11] The fluorinated elastic copolymer according to any one of the above [1] to [10], wherein the content of iodine atoms in the fluorinated elastic copolymer is from 0.01 to 5 mass%.
[12] The fluorinated elastic copolymer according to any one of the above [1] to [11], wherein the monomer (a) is tetrafluoroethylene, the monomer (c) is propylene, and the ratio of the repeating units (C)/(A) is from 40/60 to 60/40 (molar ratio).
[13] A process for producing the fluorinated elastic copolymer as defined in any one of the above [1] to [12], which comprises copolymerizing the monomer (a), the monomer (b) and, as the case requires, the monomer (c), in the presence of a radical polymerization initiator and an iodine compound represented by the formula RI₂ (wherein R is an alkylene group or a perfluoro alkylene group having at least 3 carbon atoms).
[14] The process for producing the fluorinated elastic copolymer according to the above [13], wherein the polymerization temperature is from 0°C to 60°C.
[15] A crosslinked rubber obtained by crosslinking the fluorinated elastic copolymer as defined in any one of the above [1] to [12] by an organic peroxide.

### ADVANTAGEOUS EFFECTS OF INVENTION

The fluorinated elastic copolymer of the present invention is excellent in the crosslinkability, the balance of the heat resistance, the chemical resistance and the compression set, and the mechanical properties under a high temperature condition.

The crosslinked rubber of the present invention is relatively inexpensive, and excellent in the crosslinked rubber physical properties, the heat resistance, the chemical resistance, the oil resistance and the weather resistance.

### DESCRIPTION OF EMBODIMENTS

Hereinafter, tetrafluoroethylene, hexafluoropropylene, vinylidene fluoride, chlorotrifluoroethylene, a perfluoro(alkyl vinyl ether), perfluoro(methyl vinyl ether), perfluoro(propyl vinyl ether), ethylene and propylene are referred to as TFE, HFP, VdF, CTFE, PAVE, PMVE, PPVE, E and P, respectively.

### <Fluorinated elastic copolymer>

The fluorinated elastic copolymer of the present invention has repeating units (A) based on the monomer (a), repeating units (B) based on the monomer (b) and, as the case requires, repeating units (C) based on the monomer (c).

The monomer (a) is at least one member selected from the group consisting of TFE, HFP, VdF, CTFE and PAVE.

PAVE is preferably a monomer represented by the following formula (IV).

CF₂=CF-O-R^{f} (IV)

(wherein R^{f} represents a C₁₋₈ perfluoroalkyl group or a C₁₋₈ perfluoroalkyl group having an etheric oxygen atom.)

R^{f} is preferably a group having from 1 to 6 carbon atoms, more preferably a group having from 1 to 5 carbon atoms.

Specific examples of PAVE may, for example, be PMVE, perfluoro(ethyl vinyl ether), PPVE, perfluoro(3,6-dioxa-1-heptene), perfluoro(3,6-dioxa-1-octene), and perfluoro(5-methyl-3,6-dioxa-1-nonene).

The monomer (a) is preferably at least one member selected from the group consisting of TFE, HFP, VdF and PAVE, most preferably TFE.

The monomer (b) is at least one member selected from the group consisting of a monomer represented by the following formula (I), a monomer represented by the following formula (II) and a monomer represented by the following formula (III).

CR¹R²=CR³-O-R⁴-O-CR⁵=CR⁶R⁷ (I)

CR⁸R⁹=CR¹⁰-OCO-R¹¹-COO-CR¹²=CR¹³R¹⁴ (II)

CR¹⁵R¹⁶=CR¹⁷COOCH=CH₂ (III)

(wherein each of R¹, R², R³, R⁵, R⁶, R⁷, R⁸, R⁹, R¹⁰, R¹², R¹³, R¹⁴ and R¹⁷ independently represents a hydrogen atom, a fluorine atom or a methyl group, and each of R⁴ and R¹¹ independently represents a C₁₋₁₀ alkylene group which may contain an etheric oxygen atom, and each of R¹⁵ and R¹⁶ independently represents a hydrogen atom or a C₁₋₁₀ alkyl group which may contain an etheric oxygen atom.)

The formula (I) may, for example, be divinyl ether, allyl vinyl ether or butenyl vinyl ether. One having such a compound partially or fully fluorinated may also be used, but each of R¹, R², R³, R⁵, R⁶ and R⁷ is preferably a hydrogen atom, and a particularly preferred specific example of the formula (I) is 1,4-butanediol divinyl ether.

The formula (II) may, for example, be divinyl ester, allyl vinyl ester or butenyl vinyl ester. One having such a compound partially of fully fluorinated may also be used, but each of R⁸, R⁹, R¹⁰, R¹², R¹³ and R¹⁴ is preferably a hydrogen atom, and a particularly preferred specific example of the formula (I) is divinyl adipate.

In the formula (III), each of R¹⁶ and R¹⁷ is preferably a hydrogen atom. Specific examples of the formula (III) may, for example, be vinyl crotonate and vinyl methacrylate, and vinyl crotonate is particularly preferred.

When the monomer represented by the formula (I), the formula (II) or the formula (III) is copolymerized, the double bonds in the side chains partly react during polymerization, whereby a fluorinated plastic copolymer having a branched chain will be obtained. Further, a double bond in the unreacted side chain may be used as a crosslinking group.

The monomer (c) is at least one member selected from the group consisting of E and P. The monomer (c) is preferably P.

In the fluorinated elastic copolymer of the present invention, the molar ratio [(B)/{(A)+(C)}] of the repeating units (B) to the total amount of the repeating units (A) and the repeating units (C) is preferably from 0.01/100 to 1.5/100, more preferably from 0.01/100 to 0.5/100, further preferably from 0.02/100 to 0.3/100, particularly preferably from 0.05/100 to 0.2/100. Within this range, the crosslinkability of the obtained fluorinated elastic copolymer becomes excellent, and the crosslinked rubber physical properties of the obtained crosslinked rubber become excellent. However, if [(B)/{(A)+(C)}] is larger than 0.5/100, brittleness of the obtained crosslinked rubber is likely to be insufficient. If [(B)/{(A)+(C)}] is smaller than 0.01/100, the crosslinkability of the obtained fluorinated elastic copolymer is likely to be poor, and the strength and the compression set of the obtained crosslinked rubber are likely to be insufficient.

The molar ratio [(C)/(A)] of the repeating units (C) to the repeating units (A) is preferably from 1/99 to 70/30, more preferably from 30/70 to 70/30, most preferably from 40/60 to 60/40. Within this range, the obtained crosslinked rubber will be excellent in the crosslinked rubber physical properties, the heat resistance, the chemical resistance, the oil resistance and the weather resistance.

In the fluorinated elastic copolymer of the present invention, the specific examples of the combination of the repeating units (A) and the repeating units (C) may, for example, be the following (X1) to (X4). Since the fluorinated elastic copolymer has an excellent productivity, and the obtained crosslinked polymer is excellent in the mechanical properties, the heat resistance, the chemical resistance, the oil resistance and the weather resistance, (X1), (X2) and (X4) are more preferred, and (X1) is most preferred.
(X1) The combination of the repeating units based on TFE and the repeating units based on P.
(X2) The combination of the repeating units based on TFE, the repeating units based on P and the repeating units based on VdF.
(X3) The combination of the repeating units based on TFE, the repeating units based on P and the repeating units based on PPVE.
(X4) The combination of the repeating units based on TFE, the repeating units based on P and the repeating units based on PMVE.

The copolymer composition in each of (X1) to (X4) preferably has the following molar ratio of the respective repeating units, since the obtained crosslinked rubber is excellent in the crosslinked rubber physical properties, the heat resistance, the chemical resistance, the oil resistance and the weather resistance.
(X1): Repeating units based on TFE/repeating units based on P = 40/60 to 60/40 (molar ratio).
(X2): Repeating units based on TFE/repeating units based on P/repeating units based on VdF = 40 to 60/60 to 40/1 to 10 (molar ratio).
(X3): Repeating units based on TFE/repeating units based on P/repeating units based on PPVE = 30 to 60/10 to 40/10 to 40 (molar ratio).
(X4): Repeating units based on TFE/repeating units based on P/repeating units based on PMVE = 30 to 60/10 to 40/10 to 40 (molar ratio).

The fluorinated elastic copolymer of the present invention may have repeating units based on another monomer in addition to the monomer (a), the monomer (b) and the monomer (c), within a range not to impair the effect of the present invention.

Such another monomer may, for example, be a fluorinated monomer such as vinyl fluoride, pentafluoropropylene, perfluorocyclobutene, a (perfluoroalkyl)ethylene such as CH₂=CHCF₃, CH₂=CHCF₂CF₃, CH₂=CHCF₂CF₂CF₃, CH₂=CHCF₂CF₂CF₂CF₃ or CH₂=CHCF₂CF₂CF₂CF₂CF₃; or a non-fluorinated monomer such as an α-olefin such as isobutylene or pentene, a vinyl ether such as methyl vinyl ether, ethyl vinyl ether, propyl vinyl ether or butyl vinyl ether, or a vinyl ester such as vinyl acetate, vinyl propionate, vinyl lactate, vinyl caproate or vinyl caprylate.

Further, as such another monomer, a monomer containing an iodine atom may be used. In a case where the monomer containing an iodine atom is copolymerized, it is possible to introduce iodine atoms to the side chain of the fluorinated elastic copolymer of the present invention.

The monomer containing an iodine atom may, for example, be iodoethylene, 4-iodo-3,3,4,4-tetrafluoro-1-butene, 2-iodo-1,1,2,2-tetrafluoro-1-vinyloxyethane, 2-iodoethyl vinyl ether, allyl iodide, 1,1,2,3,3,3-hexafluoro-2-iodo-1-(perfluorovinyloxy)propane, 3,3,4,5,5,5-hexafluoro-4-iodopentene, iodotrifluoroethylene or 2-iodoperfluoro(ethyl vinyl ether).

The content of repeating units based on such another monomer is, in the fluorinated elastic copolymer, preferably from 0.001 to 2.0 mol%, more preferably from 0.01 to 1.0 mol%, particularly preferably from 0.01 to 0.5 mol%.

The Mooney viscosity of the fluorinated elastic copolymer of the present invention is preferably from 10 to 200, more preferably from 20 to 180, further preferably from 30 to 170. The Mooney viscosity is an index for the molecular weight. The larger the value, the larger the molecular weight, and the smaller the value, the smaller the molecular weight. When the Mooney viscosity is within this range, the processability of the fluorinated elastic copolymer and the crosslinked rubber physical properties of the crosslinked rubber become good.

The Mooney viscosity is a value measured in accordance with JIS K6300 as described in Examples.

As a process for producing the fluorinated elastic copolymer of the present invention, a process is preferred, which comprises copolymerizing the monomer (a), the monomer (b) and, as the case requires, the monomer (c), in the presence of a radical polymerization initiator and an iodine compound represented by the formula RI₂ (wherein R is an alkylene group or a perfluoroalkylene group having at least 3 carbon atoms).

The iodine compound represented by the formula RI₂ of the present invention is a compound having iodine atoms bonded to each terminal of an alkylene group or perfluoroalkylene group having at least 3 carbon atoms.

As specific examples, 1,3-diiodopropane, 1,4-diiodobutane, 1,6-diiodohexane, 1,8-diiodooctane, 1,3-diiodoperfluoropropane, 1,4-diiodoperfluorobutane, 1,6-diiodoperfluorohexane and 1,8-diiodoperfluorooctane may, for example, be mentioned. The number of carbon atoms in the iodine compound represented by the formula Rl₂ is preferably from 3 to 8. The iodine compound represented by the formula RI₂ is more preferably an iodine compound having a perfluoroalkylene group, most preferably 1,4-diiodoperfluorobutane.

Since such an iodine compound functions as a chain transfer agent, it is possible to bond iodine atoms to the polymer main chain terminals of the fluorinated elastic copolymer when the monomers are polymerized in the presence of such an iodine compound. Further, in the present invention, a fluorinated elastic copolymer containing a branched chain may be obtained, and it is also possible to bond iodine atoms to the branched chain terminals in the same manner. Accordingly, in the present invention, such polymer chain terminals may be main chain terminals or branched chain terminals.

In the present invention, the content of iodine atoms in the fluorinated elastic copolymer is preferably from 0.01 to 5.0 mass%, more preferably from 0.05 to 2.0 mass%. When the content of iodine atoms is within this range, the crosslinkability of the fluorinated elastic copolymer becomes excellent and the mechanical properties of the crosslinked rubber become excellent.

The process for producing the fluorinated elastic copolymer of the present invention comprises polymerizing the above-described monomers in the presence of an iodine compound, and is preferably a process which comprises copolymerizing the above-described monomers in the presence of a radical polymerization initiator and the above-described iodine compound.

The amount of the iodine compound is influenced by the desired amount of the fluorinated elastic copolymer, and is preferably from 0.005 to 10 parts by mass, particularly preferably from 0.02 to 5 parts by mass, per 100 parts by mass of an aqueous medium.

The polymerization method for the fluorinated elastic copolymer of the present invention may, for example, be an emulsion polymerization method, a solution polymerization method, a suspension polymerization method or a bulk polymerization method. Preferred is an emulsion polymerization method of polymerizing monomers in an aqueous medium in the presence of an emulsifier, in view of easy controllability of the molecular weight of the fluorinated elastic copolymer and the copolymer composition, and excellent productivity.

The aqueous medium is preferably water or water containing a water-soluble organic solvent.

The water soluble organic solvent may, for example, be tert-butanol, propylene glycol, dipropylene glycol, dipropylene glycol monomethyl ether or tripropylene glycol, and is preferably tert-butanol, propylene glycol or dipropylene glycol monomethyl ether.

In a case where the aqueous medium contains the water-soluble organic solvent, the content of the water-soluble organic solvent is preferably from 1 to 50 parts by mass, more preferably from 3 to 20 parts by mass, per 100 parts by mass of water.

In the emulsion polymerization method, the pH of the aqueous medium is preferably from 7 to 14, more preferably from 7 to 11, further preferably from 7.5 to 11, most preferably from 8 to 10.5. In a case where the pH is lower than 7, the stability of the iodine compound may be decreased, and the crosslinkability of the obtained fluorinated elastic copolymer is decreased in some cases.

The period over which the pH of the aqueous medium is within the above range is preferably the entire polymerization period from initiation to completion of the emulsion polymerization, but may not be the entire polymerization period. The period over which the pH of the aqueous medium is within the above range is preferably at least 80%, more preferably at least 90%, further preferably at least 95% of the entire polymerization period.

To adjust the pH, it is preferred to use a pH buffer. The pH buffer may, for example, be an inorganic acid salt. The inorganic acid salt may, for example, be a phosphate such as disodium hydrogen phosphate or sodium dihydrogen phosphate, a carbonate such as sodium hydrogen carbonate or sodium carbonate. Specifically, the phosphate may, for example, be more preferably disodium hydrogen phosphate dihydrate or disodium hydrogen phosphate dodecahydrate.

The emulsifier is preferably an ionic emulsifier, more preferably an anionic emulsifier in view of excellent mechanical and chemical stability of a latex of the obtained fluorinated elastic copolymer. The anionic emulsifier may, for example, be preferably a hydrocarbon emulsifier such as sodium lauryl sulfate or sodium dodecylbenzene sulfonate; a fluorinated alkyl carboxylate such as ammonium perfluorooctanoate, ammonium perfluorohexanoate or ammonium w-hydroperfluorooctanoate and its salt; or a fluorinated emulsifier represented by the following formula (V) (hereinafter referred to as emulsifier (V)); or CF₃O(CF₂O)ₙCF₂COONH₄ (wherein n is 2 or 3).

F(CF₂)ₚO(CF(X)CF₂O)_{q}CF(X)COOA (V)

Here, X represents a fluorine atom or a C₁₋₃ perfluoroalkyl group, A represents a hydrogen atom, an alkali metal or NH₄, p represents an integer of from 1 to 10, and q represents an integer of from 0 to 3.

In the formula (V), p is preferably an integer of from 1 to 4, more preferably an integer of from 1 to 3. q is preferably an integer of from 0 to 2, more preferably an integer of from 1 to 2. A is preferably a hydrogen atom, Na or NH₄, more preferably NH₄.

Specific examples of the emulsifier (V) wherein A is NH₄ may, for example, be the following emulsifiers.

CF₃OCF₂CF₂OCF₂COONH₄,

CF₃O(CF₂CF₂O)₂CF₂COONH₄,

F(CF₂)₂OCF₂CF₂OCF₂COONH₄,

F(CF₂)₂O(CF₂CF₂O)₂CF₂COONH₄,

CF₃O(CF(CF₃)CF₂O)₂CF(CF₃)COONH₄,

F(CF₂)₂O(CF(CF₃)CF₂O)₂CF(CF₃)COONH₄,

F(CF₂)₃O(CF(CF₃)CF₂O)₂CF(CF₃)COONH₄,

F(CF₂)₃OCF₂CF₂OCF₂COONH₄,

F(CF₂)₃O(CF₂CF₂O)₂CF₂COONH₄,

F(CF₂)₄OCF₂CF₂OCF₂COONH₄,

F(CF₂)₄O(CF₂CF₂O)₂CF₂COONH₄,

CF₃OCF(CF₃)CF₂OCF(CF₃)COONH₄,

F(CF₂)₂OCF(CF₃)CF₂OCF(CF₃)COONH₄

and

F(CF₂)₃OCF(CF₃)CF₂OCF(CF₃)COONH₄.

The content of the emulsifier is preferably from 0.01 to 10 parts by mass, more preferably from 0.1 to 5 parts by mass, most preferably from 0.1 to 2 parts by mass, per 100 parts by mass of the aqueous medium.

The radical polymerization initiator in the process for producing the fluorinated elastic copolymer of the present invention is preferably a water-soluble polymerization initiator or a redox polymerization initiator.

The water-soluble polymerization initiator may, for example, be a persulfate such as ammonium persulfate, sodium persulfate or potassium persulfate, or an organic polymerization initiator such as disuccinic acid peroxide or azobisisobutylamidine dihydrochloride, and is preferably a persulfate, most preferably ammonium persulfate.

The content of the water-soluble polymerization initiator is preferably from 0.0001 to 3 mass%, more preferably from 0.001 to 1 mass%, to the total mass of the monomers.

The redox polymerization initiator may be a combination of a persulfate and a reducing agent, and is preferably a polymerization initiator which makes it possible to polymerize monomers such as TFE and P at a polymerization temperature within a range of from 0°C to 60°C. Specifically, the persulfate may, for example, be ammonium persulfate or an alkali metal persulfate such as sodium persulfate or potassium persulfate, and is more preferably ammonium persulfate. Further, the reducing agent may, for example, be a thiosulfate, a sulfite, a bisulfite, a pyrosulfite or a hydroxymethanesulfinate, and is preferably a hydroxymethanesulfinate, most preferably sodium hydroxymethanesulfinate.

Further, in the redox polymerization initiator, it is preferred that a small amount of iron, an iron salt such as a ferrous salt, silver sulfate or the like coexists, more preferably a water-soluble iron salt coexists as a third component. Specifically, the water-soluble iron salt may, for example, be ferrous sulfate, ferric sulfate, iron (II) nitrate, iron (III) nitrate, ferrous chloride, ferric chloride, ferrous ammonium sulfate or ferric ammonium sulfate.

It is most preferred to add a chelate agent to the redox polymerization initiator. The chelate agent is most preferably disodium ethylenediaminetetraacetate.

The amount of the persulfate to be used in the redox polymerization initiator is preferably from 0.001 to 3 mass%, more preferably from 0.01 to 1 mass%, particularly preferably from 0.05 to 0.5 mass%, to the aqueous medium. The amount of the reducing agent to be used is preferably from 0.001 to 3 mass%, more preferably from 0.01 to 1 mass%, particularly preferably from 0.05 to 0.5 mass%, to the aqueous medium. Further, the amount of the third component such as iron, the iron salt such as a ferrous salt, or silver sulfate to be used is preferably from 0.0001 to 0.3 mass%, more preferably from 0.001 to 0.1 mass%, particularly preferably from 0.01 to 0.1 mass%, to the aqueous medium. The amount of the chelate agent to be used is preferably from 0.0001 to 0.3 mass%, more preferably from 0.001 to 0.1 mass%, particularly preferably from 0.01 to 0.1 mass%, to the aqueous medium.

The polymerization conditions in the process for producing the fluorinated elastic copolymer of the present invention, such as polymerization pressure and polymerization temperature, may optionally be selected depending on the monomer composition, the decomposition temperature of the radical polymerization initiator, etc.

The polymerization pressure is preferably from 1.0 to 10 MPaG, more preferably from 1.5 to 5.0 MPaG, most preferably from 2.0 to 4.0 MPaG. If the polymerization pressure is lower than 1.0 MPaG, the polymerization rate becomes very low, such being unfavorable. Within this range, the polymerization rate will be appropriate and be easily controlled, and an excellent productivity will be obtained. If the polymerization pressure is higher than 10 MPaG, an expensive facility for polymerization will be required to increase the pressure resistance.

The polymerization temperature is preferably from 0 to 60°C, more preferably from 10 to 50°C, particularly preferably from 20 to 40°C. If the polymerization temperature is higher than 60°C, the crosslinkability of the obtained fluorinated elastic copolymer will be significantly decreased in some cases.

When the polymerization temperature and the polymerization pressure are within these ranges, the crosslinkability of the obtained fluorinated elastic copolymer becomes excellent, and the mechanical properties of the crosslinked rubber become excellent.

In the process for producing the fluorinated elastic copolymer of the present invention, the polymerization rate is preferably from 10 to 100 g/L·hr, more preferably from 5 to 70 g/L·hr, most preferably from 30 to 50 g/L·hr. If the polymerization rate is lower than the above range, the productivity will be decreased, such being practically unfavorable. On the other hand, if it is larger than the above range, the molecular weight of the obtained fluorinated elastic copolymer will be decreased, and its crosslinkability becomes insufficient. Within this range, the productivity becomes excellent, and the obtained fluorinated elastic copolymer will have an appropriate molecular weight and an excellent crosslinkability.

In the present invention, the latex of the fluorinated elastic copolymer obtained by the emulsion polymerization method is subjected to coagulation by a known method to isolate the fluorinated elastic copolymer. As the coagulation method, a method of adding a metal salt (salting out), a method of adding an inorganic acid (such as hydrochloric acid), a method by mechanical shearing, or a method of freezing and thawing may, for example, be mentioned.

Further, it is preferred that the obtained fluorinated elastic copolymer is dried by using a drying apparatus such as an oven. The drying temperature is preferably from 60 to 150°C, more preferably from 80 to 120°C. Within this range, the crosslinkability of the dried fluorinated elastic copolymer becomes excellent, and the mechanical properties of the crosslinked rubber become excellent.

The fluorinated elastic copolymer of the present invention is preferably crosslinked by using an organic peroxide.

The organic peroxide may, for example, be a dialkyl peroxide (such as di-tert-butyl peroxide, tert-butyl cumyl peroxide, dicumyl peroxide, α,α-bis(tert-butyl peroxy)-p-diisopropylbenzene, 2,5-dimethyl-2,5-di(tert-butylperoxy)hexane or 2,5-dimethyl-2,5-di(tert-butylperoxy)hexane-3), 1,1-di(tert-butylperoxy)-3,3,5-trimethylcyclohexane, 2,5-dimethylhexane-2,5-dihydroxy peroxide, benzoyl peroxide, tert-butylperoxybenzene, 2,5-dimethyl-2,5-di(benzoylperoxy)hexane, tert-butylperoxy maleic acid or tert-butylperoxyisopropyl carbonate, and is preferably a dialkyl peroxide.

The amount of the organic peroxide to be used is preferably from 0.3 to 10 parts by mass, more preferably from 0.3 to 5 parts by mass, further preferably from 0.5 to 3 parts by mass, per 100 parts by mass of the fluorinated elastic copolymer. When the amount of the organic peroxide to be used is within the above range, the crosslinking rate becomes appropriate, and the obtained crosslinked rubber will be excellent in the balance between the tensile strength and the elongation.

At the time of crosslinking the fluorinated elastic copolymer of the present invention, a crosslinking agent may be blended thereby to improve the crosslinkability. The crosslinking agent may, for example, be triallyl cyanurate, triallyl isocyanurate, trimethacryl isocyanurate, 1,3,5-triacryloylhexahydro-1,3,5-triazine, triallyl trimellitate, m-phenylenediamine bismaleimide, p-quinone dioxime, p,p'-dibenzoyl quinone dioxime, dipropargyl terephthalate, diallyl phthalate, N,N',N",N"'-tetraallyl terephthalamide or a vinyl group-containing siloxane oligomer (such as polymethylvinylsiloxane or polymethylphenylvinylsiloxane), and is preferably triallyl cyanurate, triallyl isocyanurate or trimethacryl isocyanurate, more preferably trially isocyanurate.

The blending amount of the crosslinking agent is preferably from 0.1 to 20 parts by mass, more preferably from 1 to 10 pars by mass, per 100 parts by mass of the fluorinated elastic copolymer. When the blending amount of the crosslinking agent is within this range, the crosslinking rate becomes appropriate, and the obtained crosslinked rubber will be excellent in the balance between the strength and the elongation.

Further, as the case requires, a metal oxide may be blended to the fluorinated elastic copolymer. The metal oxide is preferably an oxide of a bivalent metal. The oxide of a bivalent metal may, for example, be preferably magnesium oxide, calcium oxide, zinc oxide or lead oxide. The blending amount of the metal oxide is preferably from 0.1 to 10 parts by mass, more preferably from 0.5 to 5 parts by mass, per 100 parts by mass of the fluorinated elastic copolymer.

Further, at the time of crosslinking the fluorinated elastic copolymer of the present invention, a pigment for coloring, a filler, a reinforcing agent or the like may be used. The filler or the reinforcing agent may, for example, be carbon black, titanium oxide, silicon dioxide, clay, talc, polytetrafluoroethylene, polyvinylidene fluoride, polyvinyl fluoride, polychlorotrifluoroethylene, tetrafluoroethylene/ethylene copolymer or tetrafluoroethylene/vinylidene fluoride copolymer.

The fluorinated elastic copolymer of the present invention is blended with the organic peroxide, the crosslinking agent and other various additives usually by means of a mixing apparatus for a rubber such as rolls, a kneader, a Banbury mixer or an extruder. By means of the mixing apparatus for a rubber, a fluorinated elastic copolymer having an excellent crosslinkability can be obtained easily.

The fluorinated elastic copolymer composition is usually crosslinked at the same time as being molded by a method such as hot pressing, but may be preliminarily molded and then crosslinked.

As the molding method, compression molding, injection molding, extrusion, calendering, or dipping or coating after dissolved in a solvent, may, for example, be employed.

As the crosslinking conditions, various conditions such as hot press crosslinking, steam crosslinking or hot air crosslinking may be employed, considering the molding method and the shape of a crosslinked product. As the crosslinking temperature, usually a range of from 100 to 400°C for from several seconds to 24 hours is preferably employed. Further, secondary crosslinking is preferably employed for the purpose of improving the mechanical properties and the compression set of a crosslinked product and stabilizing other properties. As the secondary crosslinking conditions, a temperature of from 100 to 300°C for from about 30 minutes to about 48 hours is preferred.

The molded fluorinated elastic copolymer composition is also preferably crosslinked by irradiation with radiation. The radiation to be applied may, for example, be electron rays or ultraviolet rays. The amount of irradiation with electron rays is preferably from 0.1 to 30 Mrad, more preferably from 1 to 20 Mrad. When crosslinking is carried out by irradiation with radiation, the fluorinated elastic copolymer composition may be a composition containing no organic peroxide.

### EXAMPLES

Now, the present invention will be described in further detail with reference to Examples, but it should be understood that the present invention is by no means restricted thereto.

The respective physical properties were measured by the following methods. (Copolymer composition) The content of the monomer units based on TFE in the fluorinated elastic copolymer was calculated by fluorine content analysis, and the content of the monomer units based on vinyl ester and vinyl ether was calculated by means of an infrared absorption spectrum, thereby to analyze the copolymer composition.

(Content of iodine atoms) The content of iodine atoms in the fluorinated elastic copolymer was quantified by using an apparatus in which an automated sample combustion device for ion chromatography pretreatment AQF-100 manufactured by Dia Instruments Co., Ltd., and ion chromatography were combined.

(Mooney viscosity) The Mooney viscosity of the fluorinated elastic copolymer was measured in accordance with JIS K6300 using an L rotor having a diameter of 38.1 mm and a thickness of 5.54 mm at 100°C for a preheat time of 1 minute at a rotor rotating time of 4 minutes.

(Specific gravity) The specific gravity of the fluorinated elastic copolymer was measured by a method in accordance with JIS K6220-1 using a specific gravity meter manufactured by SHINKO DENSHI CO., LTD.

(Measurement of crosslinking properties and crosslinked rubber physical properties) 100 Parts by mass of the fluorinated elastic copolymer, 30 parts by mass of carbon black, 5 parts by mass of triallyl isocyanurate and 1 part by mass of 1,3-bis(tert-butylperoxyisopropyl)benzene (manufactured by Kayaku Akzo Corporation, tradename "Perkadox 14") were kneaded by twin rolls at room temperature for 10 minutes to obtain a uniformly mixed fluorinated elastic copolymer composition. Crosslinking properties of the obtained fluorinated elastic copolymer composition were measured by using a crosslinking property measuring machine (manufactured by ALPHA TECHNOLOGY CO., LTD., tradename "RPA2000") at 177°C for 12 minutes with an amplitude angle of 3°.

With respect to the crosslinking properties, M_{H} represents the maximum torque, M_{L} represents the minimum torque, and M_{H}-M_{L} means the degree of crosslinking. The crosslinking properties are crosslinkability of the fluorinated elastic copolymer, and a higher value of (M_{H}-M_{L}) means excellent crosslinkability. Further, the fluorinated elastic copolymer composition was subjected to hot pressing at 170°C for 20 minutes and then subjected to secondary crosslinking in an oven at 200°C for 4 hours to obtain a crosslinked rubber sheet of the fluorinated elastic copolymer composition having a thickness of 2 mm. The obtained crosslinked rubber sheet was punched out by a No. 3 dumbbell to prepare a sample, whereby the 100% tensile stress, the tensile strength and the elongation at break were measured at 25°C in accordance with JIS K6251. Further, the hardness was measured in accordance with JIS K6253.

(Heat tensile strength) With respect to the above-described fluorinated elastic copolymer composition, the tensile strength and the elongation at break at 150°C were measured in accordance with JIS K6251.

(Compression set) With respect to the above-described fluorinate elastic copolymer composition, the compression set was measured by conducting a compression set test in accordance with JIS K6262 at 200°C for 72 hours. EXAMPLE 1 (Production of fluorinated elastic copolymer A (TFE/P/vinyl crotonate copolymer))

A pressure reactor made of stainless steel having an internal capacity of 3,200 mL and equipped with a stirring anchor blade was deaerated, and to this reactor, 1,500 g of deionized water, 60 g of disodium hydrogen phosphate dodecahydrate, 0.9 g of sodium hydroxide, 198 g of tert-butanol, 9 g of C₂F₅OCF₂CF₂OCF₂COONH₄ as a fluorinated emulsifier and 3.8 g of ammonium persulfate were added. Further, an aqueous solution having 0.4 g of disodium ethylenediaminetetraacetate dihydrate (hereinafter referred to as EDTA) and 0.3 g of ferrous sulfate heptahydrate dissolved in 200 g of deionized water, was added to the reactor. At that time, the pH of the aqueous medium in the reactor was 9.5.

Then, a monomer mixed gas of TFE/P = 88/12 (molar ratio) was injected at 24°C so that the internal pressure of the reactor became 2.50 MPaG. The anchor blade was rotated at 300 rpm, and 6.4 g of 1,4-diiodeperfluorobutane was added. Then, a 2.5 mass% aqueous solution of sodium hydroxymethanesulfinate dihydrate (hereinafter referred to as Rongalite) having the pH adjusted to 10.0 by sodium hydroxide (hereinafter referred to as a Rongalite 2.5 mass% aqueous solution) was added to the reactor to initiate polymerization reaction. From then on, the Rongalite 2.5 mass% aqueous solution was continuously added to the reactor by a high pressure pump.

When the amount of the TFE/P monomer mixed gas injected reached 10 g, 1 mL of a preliminarily prepared vinyl crotonate/tert-butanol = 1/99 (mass ratio) solution was injected into the reactor by nitrogen back pressure. Thereafter, until the amount of the TFE mixed gas injected reached 690 g, 1 mL of the tert-butanol solution of vinyl crotonate was added every time when 10 g of the TFE/mixed gas was injected, and 69 mL was injected in total. When the total amount of the TFE/P mixed gas injected reached 700 g, addition of the 2.5 mass% Rongalite aqueous solution was stopped, and the internal temperature of the reactor was lowered to 10°C to terminate the polymerization reaction thereby to obtain a latex of fluorinated elastic copolymer A. The amount of the Rongalite 2.5 mass% aqueous solution added was 68 g. The polymerization time was 6 hours.

The latex was added to a 5 mass% aqueous solution of calcium chloride to coagulate the latex of fluorinated elastic copolymer A, thereby to precipitate fluorinated elastic copolymer A. Fluorinated elastic copolymer A was subjected to filtration and collected. Then, fluorinated elastic copolymer A was washed with deionized water and dried in an oven at 100°C for 15 hours to obtain 690 g of white fluorinated elastic copolymer A.

In the infrared spectrum of fluorinated elastic copolymer A, an absorption based on a carbon-carbon double bond in the vicinity of 1,700 cm⁻¹ was confirmed. The copolymer composition of fluorinated elastic copolymer A was such that repeating units based on TFE/repeating units based on P/repeating units based on vinyl crotonate = 56/44/0.05 (molar ratio). The content of iodine atoms in fluorinated elastic copolymer A was 0.5 mass%. The Mooney viscosity and specific gravity of fluorinated elastic copolymer A were 90 and 1.55, respectively.

Crosslinking properties and crosslinked rubber physical properties of fluorinated elastic copolymer A are shown in Table 1.

### EXAMPLE 2 (Production of fluorinated elastic copolymer B (TFE/P/vinyl crotonate copolymer))

A latex of fluorinated elastic copolymer B was obtained by polymerizing the monomers in the same manner as in Example 1 except that the concentration of the vinyl crotonate/tert-butanol solution to be injected was set to be vinyl crotonate/tert-butanol = 98/2 (mass ratio). The amount of the Rongalite 2.5 mass% aqueous solution added was 66 g. The polymerization time was 6 hours.

In the same manner as in Example 1, fluorinated elastic copolymer B was collected from the latex of fluorinated elastic copolymer B, followed by washing and drying to obtain 695 g of white fluorinated elastic copolymer B.

In the infrared spectrum of fluorinated elastic copolymer B, an absorption based on a carbon-carbon double bond was confirmed. The copolymer composition of fluorinated elastic copolymer B was such that repeating units based on TFE/repeating units based on P/repeating units based on vinyl crotonate = 56/44/0.1 (molar ratio). The content of iodine atoms in fluorinated elastic copolymer B was 0.5 mass%. The Mooney viscosity and specific gravity of fluorinated elastic copolymer B were 105 and 1.54, respectively.

Crosslinking properties and crosslinked rubber physical properties of fluorinated elastic copolymer B are shown in Table 1.

### EXAMPLE 3 (Production of fluorinated elastic copolymer C (TFE/P/vinyl crotonate copolymer))

A latex of fluorinated elastic copolymer C was obtained in the same manner as in Example 1 except that the amount of 1,4-diodeperfluorobutane added was 3.2 g. The amount of the Rongalite 2.5 mass% aqueous solution added was 61 g. The polymerization time was about 6 hours.

In the same manner as in Example 1, 690 g of fluorinated elastic copolymer C was obtained from the latex of fluorinated elastic copolymer C.

In the infrared spectrum of fluorinated elastic copolymer C, an absorption based on a carbon-carbon double bond was confirmed. The copolymer composition of fluorinated elastic copolymer C was such that repeating units based on TFE/repeating units based on P/repeating units based on vinyl crotonate = 56/44/0.05 (molar ratio). The content of iodine atoms in fluorinated elastic copolymer C was 0.25 mass%. The Mooney viscosity and specific gravity of fluorinated elastic copolymer C were 160 and 1.55, respectively.

Crosslinking properties and crosslinked rubber physical properties of fluorinated elastic copolymer C are shown in Table 1.

### EXAMPLE 4 (Production of fluorinated elastic copolymer D (TFE/P/vinyl crotonate copolymer))

A latex of fluorinated elastic copolymer D was obtained by polymerizing the monomers in the same manner as in Example 1 except that the concentration of the vinyl crotonate/tert-butanol solution to be injected was set to be vinyl crotonate/tert-butanol = 80/20 (mass ratio). The amount of the Rongalite 2.5 mass% aqueous solution added was 75 g. The polymerization time was about 6 hours.

In the same manner as in Example 1, fluorinated elastic copolymer D was collected from the latex of fluorinated elastic copolymer D, followed by washing and drying to obtain 670 g of white fluorinated elastic copolymer D.

In the infrared spectrum of fluorinated elastic copolymer D, an absorption based on a carbon-carbon double bond was confirmed. The copolymer composition of fluorinated elastic copolymer D was such that repeating units based on TFE/repeating units based on P/repeating units based on vinyl crotonate = 56/44/1.0 (molar ratio). The content of iodine atoms in fluorinated elastic copolymer D was 0.5 mass%. The Mooney viscosity and specific gravity of fluorinated elastic copolymer D were 170 and 1.55, respectively.

Crosslinking properties and crosslinked rubber physical properties of fluorinated elastic copolymer D are shown in Table 1.

### COMPARATIVE EXAMPLE 1 (Production of fluorinated elastic copolymer E (TFE/P copolymer))

A latex of fluorinated elastic copolymer E was obtained in the same manner as in Example 1 except that no vinyl crotonate was added. The amount of the Rongalite 2.5 mass% aqueous solution added was 70 g. The polymerization time was about 6 hours.

In the same manner as in Example 1, fluorinated elastic copolymer E was collected from the latex of fluorinated elastic copolymer E, and then subjected to washing and drying to obtain 690 g of white fluorinated elastic copolymer E.

In the infrared spectrum of fluorinated elastic copolymer E, no absorption based on a carbon-carbon double bond was confirmed. The copolymer composition of fluorinated elastic copolymer E was such that repeating units based on TFE/repeating units based on P = 56/44 (molar ratio). The content of iodine atoms in fluorinated elastic copolymer E was 0.5 mass%. The Mooney viscosity and specific gravity of fluorinated elastic copolymer E were 75 and 1.55, respectively.

Crosslinking properties and crosslinked rubber physical properties of fluorinated elastic copolymer E are shown in Table 1.

### COMPARATIVE EXAMPLE 2 (Production of fluorinated elastic copolymer F (TFE/P/vinyl crotonate copolymer))

A latex of fluorinated elastic copolymer F was obtained by polymerizing the monomers in the same manner as in Example 1 except that no 1,4-diiodeperfluorobutane was added. The amount of the Rongalite 2.5 mass% aqueous solution added was 65 g. The polymerization time was about 6 hours.

In the same manner as in Example 1, fluorinated elastic copolymer F was collected from the latex of fluorinated elastic copolymer F, and then subjected to washing and drying to obtain 690 g of white fluorinated elastic copolymer F.

In the infrared spectrum of fluorinated elastic copolymer F, an absorption based on a carbon-carbon double bond was confirmed. The copolymer composition of fluorinated elastic copolymer F was such that repeating units based on TFE/repeating units based on P/repeating units based on vinyl crotonate = 56/44/0.05 (molar ratio). The Mooney viscosity and specific gravity of fluorinated elastic copolymer F were 140 and 1.55, respectively.

Crosslinking properties and crosslinked rubber physical properties of fluorinated elastic copolymer F are shown in Table 1.

### COMPARATIVE EXAMPLE 3 (Production of fluorinated elastic copolymer G (TFE/P/vinyl crotonate copolymer))

A latex of fluorinated elastic copolymer G was obtained by polymerizing the monomers in the same manner as in Example 1 except that no 1,4-diiodeperfluorobutane was added and the concentration of the vinyl crotonate/tert-butanol solution injected was set to be vinyl crotonate/tert-butanol = 96/4 (mass ratio). The amount of the Rongalite 2.5 mass% aqueous solution added was 70 g. The polymerization time was about 6 hours.

In the same manner as in Example 1, fluorinated elastic copolymer G was collected from the latex of fluorinated elastic copolymer G, and then subjected to washing and drying to obtain 690 g of white fluorinated elastic copolymer G.

In the infrared spectrum of fluorinated elastic copolymer G, an absorption based on a carbon-carbon double bond was confirmed. The copolymer composition of fluorinated elastic copolymer G was such that repeating units based on TFE/repeating units based on P/repeating units based on vinyl crotonate = 56/44/0.2 (molar ratio). The content of iodine atoms in fluorinated elastic copolymer G was 0.5 mass%. The Mooney viscosity and specific gravity of fluorinated elastic copolymer G were 155 and 1.55, respectively.

Crosslinking properties and crosslinked rubber physical properties of fluorinated elastic copolymer G are shown in Table 1.

**TABLE 1**

| | Ex. 1 | Ex. 2 | Ex. 3 | Ex. 4 | Comp. Ex. 1 | Comp. Ex. 2 | Comp. Ex. 3 |
|---|---|---|---|---|---|---|---|
| Fluorinated elastic copolymer | A | B | C | D | E | F | G |
| Vinyl crotonate (molar ratio [(B)/{(A)+(C)}]) | 0.05/100 | 0.1/100 | 0.05/100 | 1.0/100 | 0 | 0.05/100 | 0.2/100 |
| Content of iodine atoms (mass%) | 0.5 | 0.5 | 0.25 | 0.5 | 0.5 | 0 | 0 |
| M_{H} [dNm] | 76 | 97 | 75 | 70 | 53 | 25 | 63 |
| M_{L} [dNm] | 5 | 7 | 11 | 23 | 3 | 10 | 20 |
| M_{H}-M_{L} [dNm] | 71 | 90 | 64 | 47 | 50 | 15 | 43 |
| Tensile strength [MPa] | 20 | 21 | 20 | 21 | 15 | Unable to mold | 16 |
| 100% Tensile stress [MPa] | 9 | 9 | 8 | 10 | 5 | | 7 |
| Elongation [%] | 240 | 230 | 230 | 130 | 270 | | 190 |
| Hardness [shore A] | 73 | 75 | 77 | 70 | 72 | | 70 |
| Compression set [%] | 26 | 20 | 28 | 32 | 30 | | 35 |

Heat tensile strength of each of the crosslinked rubbers obtained in Example 3, Example 4 and Comparative Example 3 was measured. The results are shown in Table 2.

**TABLE 2**

| | Ex. 3 | Ex. 4 | Comp. Ex. 3 |
|---|---|---|---|
| Tensile strength [MPa] | 7 | 3 | 2 |
| Elongation [%] | 120 | 30 | 50 |

### EXAMPLE 5 (Production of fluorinated elastic copolymer H (TFE/P/divinyl adipate copolymer))

A latex of fluorinated elastic copolymer H was obtained in the same manner as in Example 1 except that divinyl adipate was used instead of vinyl crotonate and the concentration of divinyl adipate/tert-butanol solution injected was set to be divinyl adipate/tert-butanol = 1.7/98.3 (mass ratio). The amount of the Rongalite 2.5 mass% aqueous solution added was 70 g. The polymerization time was 6 hours. No divinyl adipate remained in the latex was detected by gas chromatography, whereby it was suggested that all of the divinyl adipate added was reacted and copolymerized.

In the infrared spectrum of fluorinated elastic copolymer H, no absorption based on a carbon-carbon double bond in the vicinity of 1,700 cm⁻¹ was confirmed, whereby it was confirmed that all of the carbon-carbon double bonds of divinyl adipate units were reacted. The copolymer composition of fluorinated elastic copolymer H was such that repeating units based on TFE/repeating units based on P/repeating units based on divinyl adipate = 56/44/0.05 (molar ratio). The content of iodine atoms in fluorinated elastic copolymer H was 0.5 mass%. The Mooney viscosity and specific gravity of fluorinated elastic copolymer H were 90 and 1.55, respectively.

Crosslinking properties and crosslinked rubber physical properties of fluorinated elastic copolymer H are shown in Table 3.

### EXAMPLE 6 (Production of fluorinated elastic copolymer J (TFE/P/divinyl adipate copolymer))

A latex of fluorinated elastic copolymer J was obtained by polymerizing the monomers in the same manner as in Example 5 except that the concentration of the divinyl adipate/tert-butanol solution injected was set to be divinyl adipate/tert-butanol = 5/95 (mass ratio). The amount of the Rongalite 2.5 mass% aqueous solution added was 76 g. The polymerization time was 6 hours.

In the same manner as in Example 5, fluorinated elastic copolymer J was collected from the latex of fluorinated elastic copolymer J, and then subjected to washing and drying to obtain 695 g of white fluorinated elastic copolymer J.

No divinyl adipate remained in the latex was detected by gas chromatography, whereby it was suggested that all of the divinyl adipate added was reacted and copolymerized.

In the infrared spectrum of fluorinated elastic copolymer J, no absorption based on a carbon-carbon double bond in the vicinity of 1,700 cm⁻¹ was confirmed, whereby it was confirmed that all of the carbon-carbon double bonds of divinyl adipate units were reacted. The copolymer composition of fluorinated elastic copolymer J was such that repeating units based on TFE/repeating units based on P/repeating units based on divinyl adipate = 56/44/0.15 (molar ratio). The content of iodine atoms in fluorinated elastic copolymer J was 0.5 mass%. The Mooney viscosity and specific gravity of fluorinated elastic copolymer J were 105 and 1.56, respectively.

Crosslinking properties and crosslinked rubber physical properties of fluorinated elastic copolymer J are shown in Table 3.

### EXAMPLE 7 (Production of fluorinated elastic copolymer K (TFE/P/1,4-butanediol divinyl ether copolymer))

A latex of fluorinated elastic copolymer K was obtained in the same manner as in Example 5 except that 1,4-butanediol divinyl ether was used instead of divinyl adipate and the concentration of the 1,4-butanediol divinyl ether/tert-butanol solution injected was set to be 1,4-butanediol divinyl ether/tert-butanol = 4/96 (mass ratio). The amount of the Rongalite 2.5 mass% aqueous solution added was 71 g. The polymerization time was 6 hours. In the same manner as in Example 1, 690 g of fluorinated elastic copolymer K was obtained from the latex of fluorinated elastic copolymer K. No 1,4-butanediol divinyl ether remained in the latex was detected by gas chromatography, whereby it was suggested that all of the added 1,4-butanediol divinyl ether was reacted and copolymerized.

In the infrared spectrum of fluorinated elastic copolymer K, no absorption based on a carbon-carbon double bond in the vicinity of 1,700 cm⁻¹ was confirmed, whereby it was confirmed that all of the carbon-carbon double bonds of 1,4-butanediol divinyl ether units were reacted. The copolymer composition of fluorinated elastic copolymer K was such that repeating units based on TFE/repeating units based on P/repeating units based on 1,4-butanediol divinyl ether = 56/44/0.15 (molar ratio). The content of iodine atoms in fluorinated elastic copolymer K was 0.5 mass%. The Mooney viscosity and specific gravity of fluorinated elastic copolymer K were 85 and 1.55, respectively.

Crosslinking properties and crosslinked rubber physical properties of fluorinated elastic copolymer K are shown in Table 3.

### EXAMPLE 8 (Production of fluorinated elastic copolymer L (TFE/P/divinyl adipate copolymer))

A latex of fluorinated elastic copolymer L was obtained by polymerizing the monomers in the same manner as in Example 5 except that the concentration of the divinyl adipate/tert-butanol solution injected was set to be divinyl adipate/tert-butanol = 40/60 (mass ratio). The amount of the Rongalite 2.5 mass% aqueous solution added was 75 g. The polymerization time was about 6 hours.

In the same manner as in Example 1, fluorinated elastic copolymer L was collected from the latex of fluorinated elastic copolymer L, and then subjected to washing and drying to obtain 670 g of white fluorinated elastic copolymer L.

In the infrared spectrum of fluorinated elastic copolymer L, an absorption based on a carbon-carbon double bond was confirmed. The copolymer composition of fluorinated elastic copolymer L was such that repeating units based on TFE/repeating units based on P/repeating units based on divinyl adipate = 56.0/44.0/1.3 (molar ratio). The content of iodine atoms in fluorinated elastic copolymer L was 0.5 mass%. The Mooney viscosity and specific gravity of fluorinated elastic copolymer L were 170 and 1.55, respectively.

Crosslinking properties and crosslinked rubber physical properties of fluorinated elastic copolymer L are shown in Table 3.

### COMPARATIVE EXAMPLE 4 (Production of fluorinated elastic copolymer M (TFE/P/divinyl adipate copolymer))

A latex of fluorinated elastic copolymer M was obtained by polymerizing the monomers in the same manner as in Example 5 except that no 1,4-diiodeperfluorobutane was added. The amount of the Rongalite 2.5 mass% aqueous solution added was 65 g. The polymerization time was about 6 hours.

In the same manner as in Example 1, fluorinated elastic copolymer M was collected from the latex of fluorinated elastic copolymer M, and then subjected to washing and drying to obtain 690 g of white fluorinated elastic copolymer M.

No divinyl adipate remained in the latex was detected by gas chromatography, whereby it was suggested that all of the added divinyl adipate was reacted and copolymerized.

In the infrared spectrum of fluorinated elastic copolymer M, no absorption based on a carbon-carbon double bond in the vicinity of 1,700 cm⁻¹ was confirmed, whereby it was confirmed that all of the carbon-carbon double bonds of 1,4-butanediol divinyl ether units were reacted. The copolymer composition of fluorinated elastic copolymer M was such that repeating units based on TFE/repeating units based on P/repeating units based on divinyl adipate = 56/44/0.05 (molar ratio). The Mooney viscosity and specific gravity of fluorinated elastic copolymer M were 160 and 1.55, respectively.

Crosslinking properties and crosslinked rubber physical properties of fluorinated elastic copolymer M are shown in Table 3.

**TABLE 3**

| | Ex. 5 | Ex. 6 | Ex. 7 | Ex. 8 | Comp. Ex. 4 |
|---|---|---|---|---|---|
| Fluorinated elastic copolymer | H | J | K | L | M |
| Divinyl adipate (molar ratio [(B)/{(A)+(C)}]) | 0.05/100 | 0.15/100 | 0 | 1.3/100 | 0.05/100 |
| 1,4-Butanediol divinyl ether (molar ratio [(B)/{(A)+(C)}]) | 0 | 0 | 0.15 | 0 | 0 |
| Content of iodine atoms (mass%) | 0.5 | 0.5 | 0.5 | 0.5 | 0 |
| M_{H} [dNm] | 73 | 98 | 72 | 130 | 35 |
| M_{L} [dNm] | 5 | 8 | 4 | 27 | 20 |
| M_{H}-M_{L} [dNm] | 68 | 90 | 68 | 103 | 15 |
| Tensile strength [MPa] | 20 | 21 | 20 | 22 | Unable to mold |
| 100% Tensile stress [MPa] | 10 | 11 | 8 | 10 | |
| Elongation [%] | 250 | 220 | 250 | 120 | |
| Hardness [shore A] | 78 | 75 | 76 | 70 | |
| Compression set [%] | 26 | 20 | 30 | 31 | |

Summarizing the above results, it was found that each of fluorinated elastic copolymers of Examples 1 to 8 obtained by copolymerization by using a specific amount of the monomer represented by monomer (b) in the presence of the iodine compound had a high value of (M_{H}-M_{L}), an excellent crosslinkability, excellent crosslinked rubber physical properties, and excellent tensile properties under a high temperature condition. Further, specifically, the fluorinated elastic copolymers of Examples 1 to 3 and Examples 5 to 7 obtained by copolymerizing the monomers at a specified ratio showed more excellent crosslinkability and crosslinked rubber physical properties.

On the other hand, the fluorinated elastic copolymer of Comparative Example 1 in which no repeating units based on monomer (b) was contained and each of the fluorinated elastic copolymers of Comparative Examples 2 to 4 in which no iodine atom was contained, showed a poor crosslinkability and insufficient crosslinked rubber physical properties.

Further, fluorinated elastic copolymers of Examples 4 and 8 in which repeating units based on monomer (b) were contained in a little bit large amount showed crosslinked rubber physical properties with a little bit high brittleness.

### INDUSTRIAL APPLICABILITY

The fluorinated elastic copolymer of the present invention is excellent in the crosslinkability, and can provide a crosslinked rubber excellent in the mechanical properties, the heat resistance, the chemical resistance, the oil resistance and the weather resistance. The obtained crosslinked rubber is suitable as a material for an O-ring, a sheet, gasket, an oil seal, a diaphragm, a V-ring, etc. Further, it is also applicable to a heat resistant chemical resistant sealing material, a heat resistant oil resistant sealing material, a wire covering material, a sealing material for a semiconductor device, a corrosion resistant rubber coating material, a urea resistant sealing material for a grease, etc.

The entire disclosure of Japanese Patent Application No. 2008-283984 filed on November 5, 2008 including specification, claims and summary is incorporated herein by reference in its entirety.

## Claims

1. A fluorinated elastic copolymer having repeating units (A) based on the following monomer (a), repeating units (B) based on the following monomer (b) and, as the case requires, repeating units (C) based on the following monomer (c), which copolymer contains iodine atoms:
monomer (a): at least one member selected from the group consisting of tetrafluoroethylene, hexafluoropropylene, vinylidene fluoride, chlorotrifluoroethylene and a perfluoro(alkyl vinyl ether);
monomer (b): at least one member selected from the group consisting of a monomer represented by the following formula (I), a monomer represented by the following formula (II) and a monomer represented by the following formula (III);
CR¹R²=CR³-O-R⁴-O-CR⁵=CR⁶R⁷ (I)
CR⁸R⁹=CR¹⁰-OCO-R¹¹-COO-CR¹²=CR¹³R¹⁴ (II)
CR¹⁵R¹⁶=CR¹⁷COOCH=CH₂ (III)
(wherein each of R¹, R², R³, R⁵, R⁶, R⁷, R⁸, R⁹, R¹⁰, R¹², R¹³, R¹⁴ and R¹⁷ independently represents a hydrogen atom, a fluorine atom or a methyl group, and each of R⁴ and R¹¹ independently represents a C₁₋₁₀ alkylene group which may contain an etheric oxygen atom, and each of R¹⁵ and R¹⁶ independently represents a hydrogen atom or a C₁₋₁₀ alkyl group which may contain an etheric oxygen atom);
monomer (c): at least one member selected from the group consisting of ethylene and propylene.

2. The fluorinated elastic copolymer according to Claim 1, wherein the molar ratio [(B)/{(A)+(C)}] of the repeating units (B) to the total amount of the repeating units (A) and the repeating units (C) is from 0.01/100 to 1.5/100.

3. The fluorinated elastic copolymer according to Claim 1 or 2, which has iodine atoms at polymer chain terminals.

4. The fluorinated elastic copolymer according to any one of Claims 1 to 3, which has the repeating units (C), wherein (C)/(A) is from 1/99 to 70/30 (molar ratio).

5. The fluorinated elastic copolymer according to any one of Claims 1 to 4, wherein each of R¹, R², R³, R⁵, R⁶ and R⁷ in the formula (I) is a hydrogen atom.

6. The fluorinated elastic copolymer according to any one of Claims 1 to 4, wherein the monomer (b) is 1,4-butanediol divinyl ether.

7. The fluorinated elastic copolymer according to any one of Claims 1 to 4, wherein each of R⁸, R⁹, R¹⁰, R¹², R¹³ and R¹⁴ in the formula (II) is a hydrogen atom.

8. The fluorinated elastic copolymer according to any one of Claims 1 to 4, wherein the monomer (b) is divinyl adipate.

9. The fluorinated elastic copolymer according to any one of Claims 1 to 4, wherein each of R¹⁶ and R¹⁷ in the formula (III) is a hydrogen atom.

10. The fluorinated elastic copolymer according to any one of Claims 1 to 4, wherein the monomer (b) is vinyl crotonate.

11. The fluorinated elastic copolymer according to any one of Claims 1 to 10, wherein the content of iodine atoms in the fluorinated elastic copolymer is from 0.01 to 5 mass%.

12. The fluorinated elastic copolymer according to any one of Claims 1 to 11, wherein the monomer (a) is tetrafluoroethylene, the monomer (c) is propylene, and the ratio of the repeating units (C)/(A) is from 40/60 to 60/40 (molar ratio).

13. A process for producing the fluorinated elastic copolymer as defined in any one of Claims 1 to 12, which comprises copolymerizing the monomer (a), the monomer (b) and, as the case requires, the monomer (c), in the presence of a radical polymerization initiator and an iodine compound represented by the formula Rl₂ (wherein R is an alkylene group or a perfluoro alkylene group having at least 3 carbon atoms).

14. The process for producing the fluorinated elastic copolymer according to Claim 13, wherein the polymerization temperature is from 0°C to 60°C.

15. A crosslinked rubber obtained by crosslinking the fluorinated elastic copolymer as defined in any one of Claims 1 to 12 by an organic peroxide.
